# EUROPEAN PATENT APPLICATION

(11) **EP 2 001 189 A1**
(43) Date of publication of application: **10.12.2008**
(21) Application number: 07290718.1
(22) Date of filing: 08.06.2007
(51) Int. Cl.: H04L 29/06

(54) **Toolkit application launching mechanism after wrong rights detection on mobile tv smartcard**

(71) Applicant: Gemplus S.A., 13420 Gémenos (FR)
(72) Inventor: Zeamari, Ali, 13420 Gémenos (FR); Joubert, Nicolas, 13420 Gémenos (FR); Ques, Florence, 13420 Gémenos (FR)
(74) Representative: Jacquot, Ludovic R. G.

(57) **Abstract**

The invention relates to A personal token in a mobile handset such as a SIM card in a mobile phone, hosting a software entity which detects whether a received mobile TV broadcast can be decrypted or not based on information stored in the personal token, which software entity is also able to automatically initiate a questioning of the end-user as to whether he wishes to subscribe to a decryption service of the broadcast in case it is detected that the broadcast can not be decrypted.

## Description

The invention relates to a Toolkit application launching mechanism after wrong rights detection on Mobile TV smartcard

The invention relates to Mobile TV, MBMS, subscription

The invention concerns Mobile TV smartcard products

The problem solved by this invention is the online and live management of an expiring Mobile TV subscription or a not subscribed Mobile TV program. Thanks to this new service a user will then be able to extend its subscription or subscribe a new one instead of being face to a single end of transmission.

For each MBMS (standard for television on mobile terminal) command received in the broadcast stream, which contains a decryption key which is itself encrypted with a master key expected to be present on the card, the smartcard checks the key validity of the program, i.e. whether the card is able to decrypt the received key with a master key in the card.
If this received key is not valid, i.e. for example the master key is not in the card, or i.e. for example the received key can not be decrypted because some rules in the card indicate that it is no more authorized to decrypt the received key, then the smartcard triggers a Toolkit applet that proposes a subscription to this program. Toolkit applet is an example of more generally an application hosted in the handset+card system, and preferentially in the card or any other replacing secure token, which is able to launch any type of communication or action (displayed text or else) directed to be taken into account by the end-user.

For example, this applet can get and parse the input command object (the parameters of the MBMS command) and retrieve information about which TV program or service is expected to be seen (or trying to be seen).
Depending on these information, the applet can look into its dedicated file that contains a list of display texts and notify the user by a proactive command "Display Text" (for example, "end of subscription validity, do you want to buy some more time?").

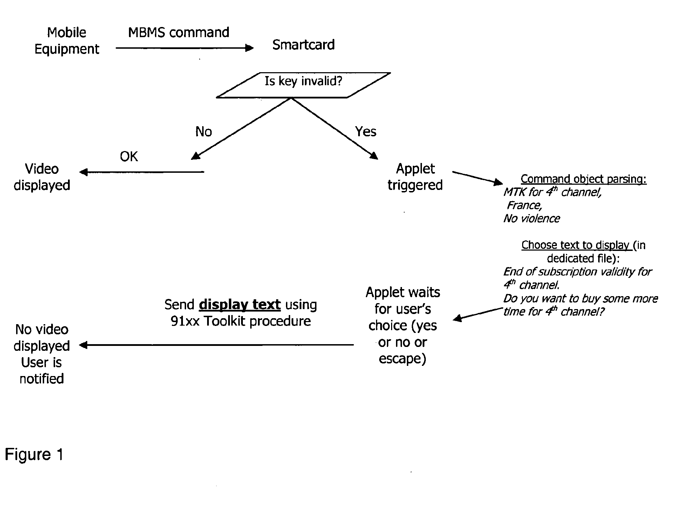

The diagram of figure 1 is an example of the mechanism usage.

When the user cannot receive the television, he is directly notified and does not have to look for some menus on its mobile
Invention does not depend on the mobile phone

## Claims

1. A personal token in a mobile handset such as a SIM card in a mobile phone, hosting a software entity which detects whether a received mobile TV broadcast can be decrypted or not based on information stored in the personal token, which software entity is also able to automatically initiate a questioning of the end-user as to whether he wishes to subscribe to a decryption service of the broadcast in case it is detected that the broadcast can not be decrypted.

2. The personal token according to claim 1, **characterized in that** the received broadcast comprises a decryption key which is intended to be decrypted by means of a master key stored in the personal token, and the detection step as to whether the the received broadcast can be decrypted or not comprises a checking step as to whether the master key is present in the card.

3. The personal token according to claim 1, **characterized in that** the detection step as to whether the the received broadcast can be decrypted or not comprises a checking step as to whether some usage rules stored in the card authorize the broadcast to be decrypted or not.
